# EUROPÄISCHE PATENTSCHRIFT

(11) **EP 2 647 603 B1**
(45) Veröffentlichungstag und Bekanntmachung des Hinweises auf die Patenterteilung: **02.08.2017**
(21) Anmeldenummer: 13160570.1
(22) Anmeldetag: 22.03.2013
(51) Int. Cl.: C03B 7/16, C03B 9/195, C03B 9/41, C03B 9/447

(54) **Vorrichtung zur Herstellung von Hohlkörpern aus einer Glasschmelze**
Device for the manufacture of hollow articles from a glass melt
Dispositif destiné à la fabrication de corps creux à partir d'un bain de verre

(30) Priorität: 03.04.2012 DE 102012006659
(43) Veröffentlichungstag der Anmeldung: 09.10.2013
(73) Patentinhaber: Waltec Maschinen GmbH, 96352 Wilhelmsthal-Steinberg (DE)
(72) Erfinder: Höfer, Britta, 96342 Stockheim (DE); Zirfas, Ulrich, 96352 Wilhelmsthal (DE); Bassing, Werner, 96364 Marktrodach (DE); Höllwarth, Falk, 96515 Sonneberg (DE)
(74) Vertreter: LS-MP von Puttkamer Berngruber Loth Spuhler

(56) Entgegenhaltungen:
- DE-U1- 20 303 444
- DE-U1- 29 810 353
- FR-A1- 2 938 254
- JP-A- S5 826 037
- JP-A- 2000 327 342
- JP-A- 2004 182 561
- JP-A- 2004 217 447
- US-A- 3 803 877
- US-A- 4 599 101
- US-A- 4 608 072
- US-A- 4 723 977
- US-A- 5 458 668
- SCHWARZER S: "SERVO ELECTRIC HOT END SYSTEMS//MECANISMES SERVO-ELECTRIQUES EN BOUT CHAUD", VERRE, INSTITUT DU VERRE, PARIS, FR, vol. 11, no. 3, 1 June 2005 (2005-06-01), pages 23-26, XP001233514, ISSN: 0984-7979
- "SYSTEME DE COMMANDE FLEXIS", VERRE, INSTITUT DU VERRE, PARIS, FR, vol. 11, no. 3, 1 June 2005 (2005-06-01), page 14/15, XP001233510, ISSN: 0984-7979
- GRUENINGER W ET AL: "MODELLING, DESIGN AND IMPLEMENTATION OF A SERVO-ELECTRIC PLUNGER MECHANISM FOR GLASS CONTAINER FORMING MACHINES", GLASS TECHNOLOGY, SOCIETY OF GLASS TECHNOLOGY, SHEFFIELD, GB, vol. 43, no. 3, 1 June 2002 (2002-06-01), pages 89-94, XP001123096, ISSN: 0017-1050

## Beschreibung

Die Erfindung betrifft eine Vorrichtung zur Herstellung von Hohlkörpern aus einer Glasschmelze nach dem Oberbegriff des Anspruchs 1 mit wenigstens einem Karussell und wenigstens einer Vorform, welche bei dem Umlauf des Karussells von wenigstens einem, aus wenigstens einer Zuführungseinrichtung der Glasschmelze austretenden Tropfen speisbar ist und mit wenigstens einer der Formung des Hohlkörpers dienenden Einrichtung, wobei wenigstens eine Zuführungseinrichtung und wenigstens eine Takeout-Einrichtung jeweils wenigstens, einen eigenen Servoantrieb aufweisen.

Aus der DE 60 2004 008 092 T2 ist eine Press-Blasmaschine bekannt, die zur Herstellung hohler Glaswaren, Bechergläser oder Weingläser dient. Die Press-Blasmaschine umfasst ein Karussell, das eine Vielzahl von Blasstationen trägt, von denen jede zum Aufnehmen von Vorformen ausgebildet ist. Die Press-Blasmaschine umfasst weiterhin einen Vorformhalter zur Aufnahme eines Glasrohlings, einen Halsring zum Halten des Glasrohlings und eine Antriebseinrichtung, die dazu dient, eine formgebende Einheit aus einer Stillstandsposition in einen Transferbereich zu versetzen.

Die DE 298 10 353 U1 offenbart einen Ausnehmer-Mechanismus zum Transport eines Hohlglasgegenständs aus der Fertigformstation einer Glasformmaschine auf eine Absetzplatte. Die Glasformmaschine umfasst darüber hinaus einen Transportarm, der den Hohlglasgegenstand trägt.

Aus der US 4,052,187 ist eine Vorrichtung zur Herstellung von Gläsern bekannt, bei der ein stempelartiger Plunger, in einem Plungerring axial verschiebbar, in eine Pressform einführbar ist. In der Pressform befindet sich flüssige Glasschmelze. Mit Einfahren des Plungers in die Pressform wird aus der Glasschmelze ein Kölbel gebildet. Zwischen dem Plungerring und einem, den Kölbel umgreifenden Zurückhaltering ist ein Ringspalt vorgesehen. Beim Pressen ist der Zurückhaltering fest mit der Pressform verbunden. Der Plungerring bildet mit dem Zurückhaltering außerhalb des Ringspalts eine Kammer, die der Aufnahme von überschüssiger Glasschmelze dient.

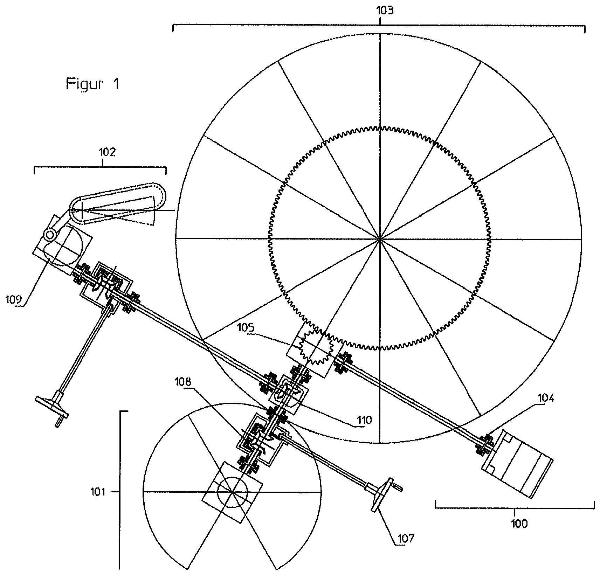

Im Stand der Technik wurde ferner eine sogenannte Press-Blasmaschine zur Herstellung von Hohlkörpern aus einer Glasschmelze eingesetzt, deren Antriebsschema sich aus der Figur 1 ergibt. Figur 1 zeigt eine Vorrichtung einer Press-Blasmaschine 103, zu der auch eine sogenannte Takeout-Vorrichtung gehört (Herausnehmer) und die mit Ziffer 101 kenntlich gemacht wurde.

Die Press-Blasmaschine wird von einem Hauptantrieb 100 angetrieben. Der Hauptantrieb wirkt dabei auf ein Ritzel 105, das mit einem Zahnrad des sogenannten Karussells der Pressblasmaschine in Verbindung steht. Das Ritzel 105 treibt über eine Antriebswelle einen Takeout 101 an. Auf der Antriebswelle sitzen ein Verteilergetriebe 110 sowie ein Differenzialgetriebe 108. Das Verteilergetriebe 110. treibt den Antrieb einer Tropfenzuführungseinrichtung 102 an. Das Differenzialgetriebe 108 ist über eine Handverstellung 107 justierbar. Gleichermaßen bedarf die Tropfenzuführungseinrichtung 102 einer Justierung, eines weiteres Differenzialgetriebes und eines Antriebs der Tropfenzuführungseinrichtung 102 mittels Kurvenscheibe 109. In der zwischen dem Hauptantrieb und dem Ritzel zwischengeschalteten Antriebswelle ist eine Kuppelung 104 angeordnet. Dieser Aufbau offenbart eine komplexe Anordnung von Rangordnungen der jeweiligen Antriebe bzw. Folgeantriebe, die sämtlich einer hochkomplizierten Präzisierung und Synchronisation bedürfen, damit der Glastropfen passgenau in die jeweilige Vorform und weitere Verarbeitungsmodule überführt werden kann. Die Vielzahl der Rangordnungen und Zahnradpaarungen bewirken zudem ein für den Herstellungsprozess der Hohlkörper schädliches Spiel, das der hochkomplizierten Synchronisation entgegen steht. Aufgrund der hohen Umlaufgeschwindigkeiten und der vorgenannten Spiele führen die verschiedenen, dem Hauptantrieb nachgeordneten Getriebe zu einem permanenten Justierungsbedarf während des laufenden Betriebs, was nicht nur zu hoch komplexen Arbeitsabläufen, sondern auch zu einem Gefährdungspotenzial für die mit diesen Anlagen im Betrieb betrauten Mitarbeiter des betreffenden Unternehmens führt.

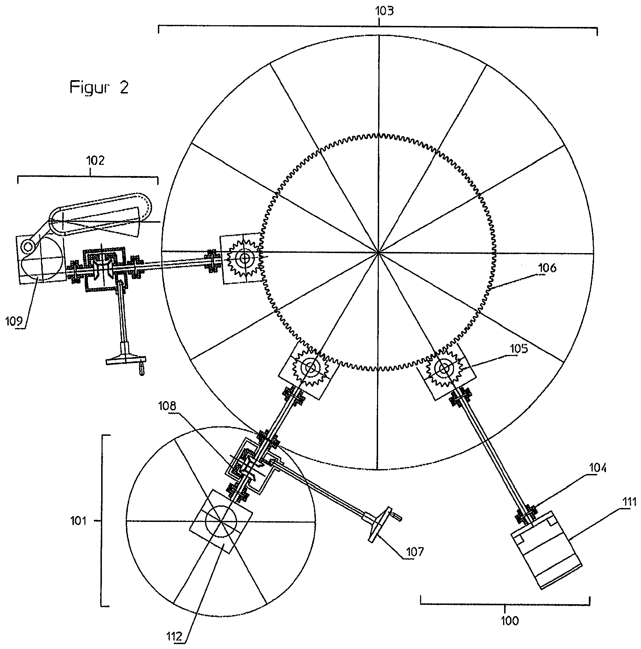

Aus der Figur 2 ergibt sich ein weiterer verwandter Stand der Technik einer derartigen Press-Blasmaschine 103. Dieser unterscheidet sich von der Press-Blasmaschine 103 der Figur 1 im Wesentlichen dadurch, dass der Hauptantrieb 100 sowie der Antrieb des Takeout 112 voneinander separiert sind. Gleiches gilt im Vergleich zu dem Antrieb 109 der Tropfenzuführungseinrichtung 102.

Der Antriebsmotor 111 des Antriebs 100 steht dabei mit einer Antriebswelle mit dem auf das Hauptgetriebe 106 einwirkenden Ritzels 105 in Verbindung. Das Hauptgetriebe 106 treibt über je eine Antriebswelle den Takeout 101 bzw. die Tropfenzuführung 102 an. In die genannten Antriebswelle sind Differenzialgetriebe 108 zwischengeschaltet, die über je eine Handverstellung 107 justierbar sind.

Auch hier zeigen sich die vorerwähnten Nachteile des Standes der Technik gemäß Figur 1.

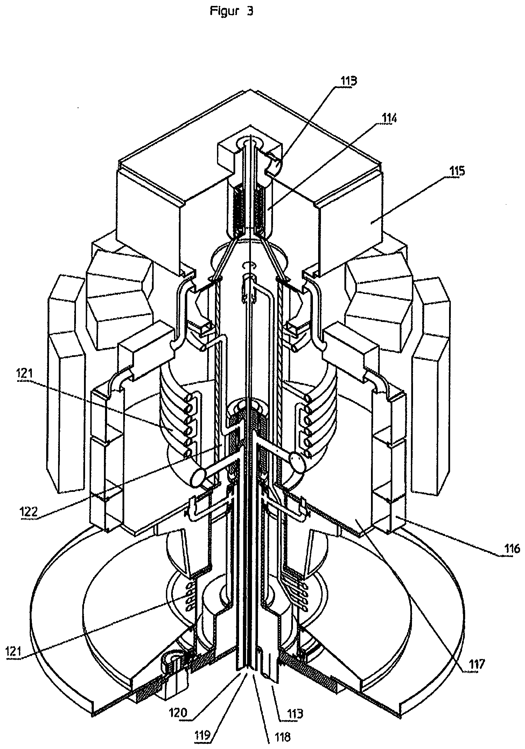

Dieser vorerwähnte Stand der Technik ist ferner dadurch gekennzeichnet, dass die Übertragung der zur Funktion der Vorrichtung erforderlichen Medien, wie z.B. Wasser, Vakuum, Kühlluft, Pressluft oder Schmieröl durch mechanische verschleißbehaftete und für den Wartungsfall sehr schwer zugängliche Drehübertrager erfolgt, wie die Prinzipskizze der Figur 3 anschaulich zeigt.

Figur 3 zeigt einen Drehübertrager 122, der bei bekannten Vorrichtungen zur Herstellung von Hohlkörpern, die zur Produktion der Hohlkörper erforderlichen Medien wie Wasser 119, Druckluft 118; 120 sowie Gebläseluft 113 bereitstellt. Senkrecht zu einer Grundplatte 117 des Karussells werden die Medien von einem Fuß des Drehübertragers 122 Verteilerrohren 121 zugeführt, die die Medien den Verbrauchern innerhalb der Vorrichtung zuführen. Im Bereich eines Schaltschrankes 115 sind elektrische Schleifringübertrager 114 dargestellt. Die Schleifringübertrager 114 sind für die Zufuhr von elektrischer Energie sowie zur Sicherstellung sicherheitsrelevanter Steuerspannung erforderlich. Die Drehüberträger 122 sind im Stand der Technik im Zentrum der Vorrichtung zur Herstellung von Hohlkörpern angeordnet. Zur Verhinderung von Kurzschlüssen sind die Flüssigkeitsleitungen räumlich vertikal unterhalb stromführender Bauteile 114 geführt. Aufgrund ihrer begrenzten Lebensdauer müssen die elektrischen Schleifringübertrager 114 und andere Stromabnehmer jedoch in regelmäßigen Abständen ausgetauscht werden. Hierfür ist eine komplette Demontage betroffener Bauteile erforderlich. Betroffen sind zum Beispiel der Schaltschrank 115, die Bedienelemente 116 und die Medienverteilerrohre 121.

Die aus dem Stand der Technik bekannten Press-Blasmaschinen erweisen sich also als nachteilig, da die einzelnen Baugruppen innerhalb des Press-Blas-Mechanismus insbesondere gegeneinander Spiel aufweisen und verschleißbehaftet sind.

Der Erfindung liegt daher die Aufgabe zu Grunde, eine Vorrichtung zur Herstellung von Hohlkörpern bereitzustellen, bei der die vorgenannten Nachteile weitestgehend ausgeschaltet sind.

Des Weiteren ist es Ziel der Erfindung die mit dem Stand der Technik verbundene Störanfälligkeit der Vorrichtung zur Herstellung von derartigen Hohlkörpern und damit kostspielige Reparaturen zu vermeiden.

Des Weiteren ist es Ziel, die Energieeffizienz zu steigern und die kontinuierlichen Produktionslaufzeiten der Maschinen zu verbessern.

Weiterhin stellt sich die Erfindung zur Aufgabe, eine Press-Blasmaschine über Effektivität des Produktionsverhältnisses zu verbessern und reproduzierbare Qualität der herzustellenden Hohlkörper zu erhöhen.

Die Aufgabe wird gelöst durch die Merkmale des Anspruchs 1.

Sämtliche in der Folge genannten Beispiele sind nur exemplarisch und in keiner Weise ausschließlich gemeint.

Der Erfindung liegt eine Vorrichtung zur Herstellung von Hohlkörpern aus einer Glasschmelze zu Grunde, die wenigstens ein Karussell aufweist, das vorzugsweise mit einem oder weiter vorzugsweise einer Mehrzahl von Segmenten ausgestattet ist. Bei einem Umlauf des wenigstens einen Karussells wird ein wenigstens ein Glastropfen aus einer Glasschmelze über wenigstens eine Zuführungseinrichtung, vorzugsweise über wenigstens eine Zuführungsrinne, wenigstens einer Vorform zugeführt.

Die Vorrichtung weist weiterhin wenigstens eine der Formung des Hohlkörpers dienende Einrichtung auf.

Unter Servoantrieb im Sinne der Erfindung wird insbesondere jeglicher Antrieb mit elektronischer Lage-, Geschwindigkeits- oder Momentregelung oder eine Kombination derselben verstanden. Der Servoantrieb und seine verschiedenen Ausführungsformen sind an sich bekannt. Besonders bevorzugt werden wenigstens für die auf dem Karussell mitfahrenden Servoantriebe sogenannte dezentrale Servoantriebe (auch genannt: Feldbusservorantriebe). Hierdurch wird es möglich, bei der erfindungsgemäßen Vorrichtung die in Figur 3 dargestellten Schaltschränke 115, 116, welche einer hohen Temperaturbelastung ausgesetzt sind, zu vermeiden. Hierdurch wird insbesondere für Wartungsarbeiten der Zugang zu z.B. sich im inneren Bereich der Maschine befindlichen Bauteile erleichtert.

Gemäß der Erfindung weist sowohl die wenigstens eine Zuführungseinrichtung als auch die wenigstens eine Takeout- Einrichtung jeweils wenigstens einen Servoantrieb auf.

Diese Einrichtung besteht vorzugsweise aus wenigstens einer Presseinrichtung und/oder wenigstens einer Blaseinrichtung oder einer Kombination von beiden.

Der neu geformte Hohlkörper ist wenigstens einer Takeout-Einrichtung zuführbar.

Zwischen den aufeinander folgenden Bearbeitungsvorgängen kann gegebenenfalls eine Mehrzahl von Zusatzaggregaten angeordnet sein, die der Umsetzung der Form und der Umsetzung der erzeugten Hohlkörper dienen.

Die erfindungsgemäße Vorrichtung weist typischer Weise ein Karussell auf. Dieses Karussell weist seinerseits typischer Weise eine Grundplatte zur Aufnahme der Arbeitselemente, insbesondere wenigstens eine Vorform, wenigstens eine Presseinrichtung, wenigstens eine Blaseinrichtung, wenigstens eine Bodenstation, wenigstens eine Fertigform auf. Das Karussell weist weiter Energie- und Datenüberträger, sowie den Hauptantrieb auf.

Die patentgemäße Vorrichtung zur Herstellung von Hohlkörpern aus einer Glasschmelze weist weiterhin wenigstens eine Zuführungseinrichtung auf. Mittels der Zuführungseinrichtung wird ein aus der Glasschmelze austretender Glastropfen der Vorform zugeführt. Die Zuführungseinrichtung kann dabei verschiedene Ausgestaltungen umfassen, zum Beispiel ein zylinderförmiges Rohr sein oder als Zuführungsrinne ausgestaltet sein. Des Weiteren umfasst sie einen eigenständigen Antrieb, insbesondere in der Ausgestaltung eines Servoantriebs.

Des Weiteren verfügt die erfindungsgemäße Vorrichtung über wenigstens eine Takeout-Einrichtung, die auch als Herausnehmer bezeichnet wird. Diese Takeout-Einrichtung übernimmt von dem Karussell den geformten Hohlkörper. Sie ist dem Karussell benachbart angeordnet. Beide Maschinensätze greifen ineinander.

Das Karussell verfügt erfindungsgemäß über einen Servoantrieb, der ein Direktantrieb ist. Des Welteren weisen die wenigstens eine Zuführungseinrichtung und die wenigstens eine Takeout-Einrichtung jeweils wenigstens einen Servoantrieb auf. Auch diese Servo-Antriebe sind erfindungsgemäß Direktantriebe.

Idealerweise besteht ein solcher Direktantrieb aus wenigstens einem aktiven Statorsegment und wenigstens einem passiven Rotorelement.

Die erfindungsgemäße Verwendung eines Servoantriebs, bei der die Kraftübertragung durch elektromagnetischen Kraftschluss erfolgt, bewirkt eine Eliminierung jeglichen Spiels und jeglichen Verschleißes zwischen aus dem Stand der Technik bekannten Koppelgliedern, die einen Hauptantrieb der Vorrichtung mit einem Antrieb der Tropfenzuführungseinrichtung und dem Takeout verbinden. Ein weiterer Vorteil besteht darin, dass die Anzahl mechanischer Bauteile und damit zu wartender Komponenten deutlich verringert werden kann, wodurch sich auch die Herstellungskosten weiter reduzieren lassen. Dadurch können Wartungsarbeiten weitgehend vermieden bzw. Wartungsintervalle vergrößert werden. Der Direktantrieb ist in der Herstellung vergleichsweise günstig. Soweit ein Direktantrieb bei der Zuführungseinrichtung verwendet wird, ist dieser relativ einfach nachrüstbar.

Die Verwendung von Servoantrieben ermöglicht zudem eine vorausschauende Wartung. Zu jeder Produktionseinstellung sind die aktuellen Betriebszustände, Grenzwerte, Schleppfehler und/ oder Stromaufnahmen speicherbar. Referenzdaten werden mit Daten des aktuellen Betriebszustands verglichen. Auf diese Weise können Meldungen und Warnungen vor Eintritt eines Störfalls generiert werden. Überprüfungen oder Wartungen des Systems werden vor dem Störfall ausgelöst, wodurch Revisionen planbar sind und Produktionsausfälle und Reparaturkosten minimiert werden können.

Das wenigstens eine Karussell weist vorzugsweise eine Vielzahl von Sektionen und eine Sektionsbasis auf. In der vorliegenden Erfindung wird für den Begriff der Sektion auch der Begriff des Segmentes verwendet. Im Zusammenhang mit einer vorzugsweisen Ausgestaltung der Erfindung beinhaltet die wenigstens eine Sektion vorzugsweise sämtliche Einrichtungen, die zum Formen von Hohlkörpern aus Tropfen einer Glasschmelze erforderlich sind. Die Sektionen sind an dem wenigstens einen Karussell der Vorrichtung angeordnet. Die Sektionsbasis ist eine Schnittstelle zwischen dem Segment und dem Karussell.

Eine Sektion weist wenigstens eine Vorform, wenigstens eine der Formung des Hohlkörpers dienende Einrichtung, vorzugsweise eine Presseinrichtung, wenigstens einen Neckring sowie wenigstens eine Blaseinrichtung sowie gegebenenfalls eine Bodenstation auf. Ferner kann die Sektion eine kombinierte Press-Blaseinrichtung aufweisen. Bestandteil der Presseinrichtung ist vorzugsweise ein Plunger sowie ein Neckring. Bestandteil der Blaseinrichtung ist u.a. die Fertigform, die aber nicht Gegenstand der vorliegenden Erfindung ist.

Durch die bevorzugte Konstruktion des Karussells in der Segmentbauweise ist ein einfacher Wechsel/ Wartung dieser Elemente ohne zeitraubende Demontagen möglich.

Die Formung eines Hohlkörpers bei einem Press-Blasverfahren erfolgt in der Weise, dass zunächst der Kölbel hergestellt wird. Dies geschieht typischer Weise dadurch, dass der Glastropfen mit Hilfe der wenigstens einen Presseinrichtung unter Zusammenwirken von Vorform, Neckring und Plunger zum Kölbel gepresst wird. In einem sich daran anschließenden Verfahrensteilakt wird der Kölbel mittels der Blaseinrichtung unter deren Zusammenwirkung mit Neckring, Fertigform und Boden zum Hohlkörper geformt. Presseinrichtung und Blaseinrichtung können in einem Maschinenbauteil kombiniert angeordnet sein.

Der Plunger ist ein Bauteil, mit dem der Glastropfen im Hohlraum zwischen Vorform und Neckring zum Kölbel umgeformt wird. Der Neckring ist zwischen Plunger und Vorform angeordnet; seine Funktion ist es, den Vorformling bzw. den Kölbel für den Zeitraum von der Vorformung bis zur. Entnahme des Hohlkörpers durch den Takeout aufzunehmen und zu transportieren.

Nach einer bevorzugten Ausführungsform der Erfindung ist der wenigstens eine Servoantrieb des wenigstens einen Karussells die Führungsgröße für alle anderen Antriebe, vorzugsweise alle angekoppelten Nebenantriebe. Des Weiteren kann es bevorzugt sein, dass der wenigstens eine Servoantrieb entweder der wenigstens einen Takeout-Einrichtung oder der wenigstens einen Zuführungseinrichtung die Führungsgröße für alle anderen Antriebe ist.

In der Steuerung der Vorrichtung für die Synchronisation des Servoantriebs oder der Servoantriebe sind elektronische (spielfreie) Getriebe sowie Geschwindigkeitsprofile hinterlegt, mit denen Bewegungsabläufe geschwindigkeits-, winkelsynchron und wiederholgenau gesteuert werden. Hierdurch wird die Genauigkeit der Speisung des Glastropfens aus der Zuführungseinrichtung in die Vorform erheblich verbessert. Denn hierdurch wird weitgehend vermieden, dass die Tropfenabgabe nicht mittig in die Vorform erfolgt und der Tropfen gegebenenfalls an der Wandung der Vorform auftreffen kann. Letzteres würde zu einer erheblichen Qualitäts- und Ausbeuteeinbuße der Vorrichtung führen.

Die Bewegungsgeschwindigkeit entspricht einem vorbestimmten Zeitabschnitt der Rotationsgeschwindigkeit des Karussells. Der Vorteil der Erfindung besteht darin, dass die bilaterale Geschwindigkeit des Tropfens mit Austritt des Tropfens aus der Zuführungseinrichtung und seinem Eintritt in die Vorform an die Rotationsgeschwindigkeit des Karussells angepasst ist. Der Zeitpunkt, in dem die Zuführungseinrichtung und das Zentrum der Vorform des Karussells deckungsgleich übereinander liegen ist der Zeitpunkt, in dem der Übergang des Tropfens von der Zuführungseinrichtung in die Vorform stattfindet. Beispielhaft kann die Umfangsgeschwindigkeit des Karussells 1200 mm/s betragen. Hierdurch ist eine laterale Bewegung von 12 mm je 1/100-tel Sekunde erreichbar. Hieraus ist erkennbar, welch großer Einfluss aus einer Schwankung des Tropfenübergabezeitpunktes auf die zentrische Lage des Tropfens in der Vorform resultiert. Durch die Erfindung wird der Fehler konventionell angetriebener Zuführungseinrichtungen bei der Übergabe des Tropfens in die Vorform vermieden.

Vorzugsweise ist unter einer Zuführungseinrichtung eine Zuführungsrinne zu verstehen.

Diese Vorteile ergeben sich analog für die Anforderungen an den Takeout. Es wird erreicht, dass das Zentrum der Greiferzangen des Takeouts zum Zeitpunkt der Entnahme des Hohlkörpers exakt mit dem durch den Neckring definierten Zentrum des Hohlkörpers übereinstimmt. Andernfalls würde dies zu einer erheblichen Qualitäts- und Ausbeuteeinbuße der Vorrichtung führen.

Eine besonders bevorzugte Ausführungsform der Vorrichtung sieht vor, dass die wenigstens eine Takeout-Einrichtung wenigstens einen Roboter aufweist. Der Vorteil besteht darin, dass der Roboter elektronisch an die Presseinrichtung sowie Blaseinrichtung oder die kombinierte Press-Blaseinrichtung anpassbar ist. Der Roboter ist zudem einfach in der Umschaltung bzw. in der Änderung des Bewegungsablaufs, wodurch eine rasche Anpassung an unterschiedliche Formen und Ausprägungen der herzustellenden Hohlkörper möglich ist.

Eine weitere bevorzugte Ausführungsform der Erfindung sieht vor, dass das wenigstens eine Karussell und/oder das Segment des wenigstens einen Karussells wenigstens einen Roboter aufweist und/oder dass wenigstens eine der beiden Ausführungsformen ein Roboter ist.

Die Vorform kann in einer definierten Warteposition am Segment der Presseinrichtung bzw. der Blaseinrichtung positioniert sein. Der Roboter nimmt die Vorform auf, Insbesondere greift er sie und bewegt diese in die Tropfenzuführungsposition.

Hierbei kann der Roboter die Vorform entgegen der Umfangsgeschwindigkeit des Karussells bewegen, wodurch eine deutliche Verringerung der absoluten Geschwindigkeit der Vorform erreicht wird. Durch diese verringerte Geschwindigkeit wird die Qualität der Tropfenzuführung gravierend verbessert.

Hierauf bewegt der Roboter vorzugsweise die Vorform mit dem Tropfen hin zur Presseinrichtung. Es kann vorgesehen sein, dass die Vorform durch eine Einrichtung an der der Formung des Hohlkörpers dienenden Presseinrichtung und/oder Blaseinrichtung und/oder kombinierten Press-Blaseinrichtung fixiert wird. Die Einrichtung kann die Fixierung pneumatisch, magnetisch, mechanisch oder hydraulisch oder aus Kombinationen hieraus realisieren. Die Fixierung kann lösbar sein. Hierauf erfolgt die Formung des Kölbels durch die Presseinrichtung oder eine kombinierte Press-Blaseinrichtung. Nach dem Pressvorgang greift der Roboter die Vorform in der Presseinrichtung und/oder in der kombinierten Press-Blaseinrichtung und führt die Vorform wieder in die Warteposition zurück.

In einem weiteren Bewegungszyklus greift der Roboter vorzugsweise den Boden aus einer definierten Warteposition am Segment der Press-Blasmaschine und bewegt den Boden durch einen vordefinierten Bewegungsablauf unter den Kölbel. Durch die vertikale Bewegung des Bodens unter dem sich durch Schwerkraft auslängenden Kölbel kann die Formung des Kölbels positiv gesteuert werden. Hierauf erfolgt die Fertigformung des Hohlkörpers durch die Blaseinrichtung oder der kombinierten Press-Blaseinrichtung. Nachfolgend setzt der Roboter den Boden wieder in die definierte Warteposition.

Es kann weiter vorgesehen sein, dass der Roboter den fertig geformten Hohlkörper mit seinem Greifer aus der Blaseinrichtung oder der kombinierten Press-Blaseinrichtung entnimmt und einer weiteren nicht näher beschriebenen Transporteinrichtung zuführt.

Den vorgeschilderten Greifbewegungen im Sinne der vorliegenden Erfindung sind auch solche Bewegungsabläufe gleichgestellt, die durch andere Aufnahmemittel bewerkstelligt werden. Hierbei kommen z.B. Sauger, Magnete in Betracht. Die Aufnahmemittel, insbesondere die Greifer, können entsprechend der zu handhabenden Gegenstände, z.B. Vorform, Boden oder Hohlkörper, gewechselt, angepasst und eingestellt werden.

Das Vorstehende gilt spiegelbildlich auch für eine solche Ausführungsform, bei der zur Bewegung der der Formung des Hohlkörpers dienenden Einrichtung wenigstens ein Roboter vorgesehen ist.

Diese Ausführungsformen erweisen sich als vorteilhaft, weil der beschriebene Roboter aufwendige mechanische Baugruppen z.B. Vorformmechanismus, Bodenhubmechanismus und Takeout-Einrichtung vereinfacht. Ein weiterer Vorteil besteht in der einfachen Umschaltung bzw. Änderung des Bewegungsablaufes und einer vergleichsweise schnellen Anpassung an verschiedene Vorformen und Hohlkörperformen.

Durch die Verwendung von Robotern werden darüber hinaus alle dem Stand der Technik anhängenden negativen Eigenschaften, wie z.B. schlechte Reproduzierbarkeit von pneumatischen Zylindern, deren hoher Verschleiß, damit verbundene Produktionsausfälle und vor allen Dingen die Gefährdung im Arbeitsablauf eliminiert.

Die Roboter werden hierbei elektronisch an den Hauptantrieb der Maschine gekoppelt. Ein weiterer Vorteil besteht in der einfachen Umschaltung bzw. Änderung des Bewegungsablaufes und ein schnelle Anpassung an verschiedene Artikel und Formen.

In einer weiteren Variante kann der wenigstens eine Roboter stationär außerhalb des Karussells angeordnet sein. Des Weiteren kann der wenigstens eine Roboter stationär außerhalb der Takeout-Einrichtung oder des Segments des Karussells angeordnet sein. Der Roboter kann in dieser Ausgestaltung beim Betrieb der Vorrichtung gezielt von außen in das Karussell, in die Takeout-Einrichtung oder in ein gewünschtes Segment des Karussells eingreifen. In diesem Fall vollzieht der Roboterfuß die kontinuierlichen Umlaufbewegungen des Karussells bzw. der Takeout-Einrichtung nicht nach. Die stationäre Anordnung des wenigstens einen Roboters außerhalb der vorerwähnten Maschinenbaugruppen erfüllt dieselben Vorteile wie im Falle seiner mit dem Karussell mitlaufenden Anordnung; darüber hinaus gewährleistet die dezentrale und mechanisch entkoppelte Bauweise einen einfachen Wechsel des Roboters bzw. eine einfache Wartung ohne zeitraubende Demontage am Karussell.

Eine Ausführungsform der Erfindung sieht vor, dass zur Bewegung der wenigstens einen Vorform von der Tropfenzuführungspositionen zur wenigstens einen Presseinrichtung wenigstens ein Servoantrieb vorgesehen ist. Dieser Servoantrieb kann ein Linearmotor sein. Bevorzugt ist, dann wenn die Antriebskinematik die Antriebsenergie in rotatorischer Form benötigt, ein Torquemotor. Weiter kommt als geeignet ein konventioneller Motor mit Ritzel-Zahnstange in Betracht. Diese Antriebe können weiter bevorzugt Kniehebelgetriebe aufweisen. Diese Antriebe können weiter bevorzugt Gewindespindel/ Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Antriebe können weiter bevorzugt Kurbelantriebe aufweisen. Diese Ausgestaltungen des Servoantriebs gelten sinngemäß auch für die weiteren erfindungsgemäß vorgesehenen Servoantriebe.

Eine weitere Ausführungsform der Erfindung sieht vor, dass der Bewegungsablauf spiegelbildlich von der zur Bewegung der der Formung des Hohlkörpers dienenden Einrichtung zur wenigstens einen Vorform erfolgt. Auch bei dieser Ausgestaltung ist der Einsatz wenigstens eines Servoantriebs vorgesehen. Dieser wenigstens eine Servoantrieb kann ein Linearmotor sein. Bevorzugt ist, dann wenn die Antriebskinematik die Antriebsenergie in rotatorischer Form benötigt, ein Torquemotor. Weiter kommt als geeignet ein konventioneller Motor mit Ritzel-Zahnstange in Betracht. Diese Antriebe können weiter bevorzugt Kniehebelgetriebe aufweisen. Diese Antriebe können weiter bevorzugt Gewindespindel/ Gewindemutter-Kombinationen aufweisen. Diese Antriebe können weiter bevorzugt als Kurvengetriebe ausgeführt werden. Diese Antriebe können weiter bevorzugt Ketten- und Zahnriemen umfassen. Diese Antriebe können weiter bevorzugt Kurbelantriebe aufweisen.

Eine weitere Ausführungsform der Erfindung sieht vor, dass zur Bewegung des wenigstens einen Plungers relativ zur wenigstens einen Vorform und/oder zur wenigstens einen Fertigform wenigstens einen Servoantrieb vorgesehen ist. Dieser wenigstens eine Servoantrieb kann ein Linearmotor sein. Bevorzugt ist, dann wenn die Antriebskinematik die Antriebsenergie in rotatorischer Form benötigt, ein Torquemotor. Weiter kommt als geeignet ein konventioneller Motor mit Ritzel-Zahnstange in Betracht. Diese Antriebe können weiter bevorzugt Kniehebelgetriebe aufweisen. Diese Antriebe können weiter bevorzugt Gewindespindel/ Gewindemutter-Kombinatlonen aufweisen. Diese Antriebe können weiter bevorzugt als Kurvengetriebe ausgeführt werden. Diese Antriebe können weiter bevorzugt Ketten- und Zahnriemen umfassen. Diese Antriebe können weiter bevorzugt Kurbelantriebe aufweisen.

In einer bevorzugten Ausführungsform der Erfindung ist es vorgesehen, dass die elektrische Energieübertragung wenigstens eine vorzugsweise ortsfeste Zuführung und wenigstens einen mit dem Karussell rotierenden Abnehmer aufweist. Vorteilhaft ist es weiter, wenn die Übertragung elektrischer Energie über ein erstes Primärteil auf ein, mit dem Karussell rotierendes Sekundärteil erfolgt. Durch diese Ausführungsform ist diese Energieübertragung kontaktlos und damit im Vergleich zu den Ausführungsformen des Standes der Technik keinem Verschleiß unterlegen. Die Störanfälligkeit sowie der Reparaturaufwand werden dadurch reduziert.

In dieser Ausführungsform kann die Energieübertragung zwischen der wenigstens einen Zuführung und dem wenigstens einen Abnehmer, mithin zwischen dem Primär- und dem Sekundärteil induktiv erfolgen. Induktionswicklungen übertragen die statisch zugeführte Primärenergie auf ein ruhendes primäres Eisenpaket. In einer weiteren Übertragung geht die Primärenergie von einem primären Eisenpaket über einen Luftspalt auf ein sekundäres Eisenpaket und eine sekundäre Induktionswicklung über, welche mit dem Karussell der Vorrichtung zur Herstellung von Hohlkörpern rotiert.

In einer zusätzlichen Ausführungsform der Erfindung erfolgt die Datenübertragung zu der Vorrichtung kontaktlos. Der zunehmende Automatisierungsgrad und ein stetig wachsender Anteil an intelligenten Aktoren führen zu einem stetig wachsenden Datenvolumen. Die Erfindung erweist sich als vorteilhaft, da sie die für die Übertragung der Busprotokolle erforderliche Geschwindigkeit und Güte in der Datenübertragung gewährleistet. Die Leistungsfähigkeit konventioneller Drehüberträger wird bei weitem überstiegen. Es kommen leistungsfähige übertragungsprotokolle wie zum Beispiel Profi-Bus, Device-Net oder Profi-Net zum Einsatz.

Alternativ kann vorgesehen sein, dass die Signale eines jeden Datenkanals eine Lichtsignalübertragung aufweisen.

Gemäß einer weiteren Variante der Erfindung ist in die Vorrichtung wenigstens eine Pumpe integriert, die das zur Herstellung des Hohlkörpers bzw. das zur Funktion der Vorrichtung erforderliche Wasser, Vakuum, Kühlluft, Pressluft oder Schmieröl bereitstellt.

Eine weitere Ausführungsform der Erfindung sieht vor, dass die Pumpe elektrisch betrieben und zur Wasserförderung an einen ortsfesten Ringkanal angeschlossen ist. Der wenigstens einen Pumpe wird über eine kontaktlose, Energieübertragung elektrischer Strom zugeführt. Sämtliche zur Betriebsstoffversorgung vorgesehene Pumpen sind mithilfe einfacher Anschlussstellen zu Wartungszwecken binnen kürzester Zeit austauschbar.

Zusätzlich ist in die Vorrichtung wenigstens ein Kompressor integriert, der die Pressluft bereitstellt, die zur Bearbeitung des Hohlkörpers erforderlich ist. Die Stromversorgung des Kompressors erfolgt kontaktlos. Die Kompressoren weisen einfache Anschlussstellen auf, und sind zu Wartungszwecken kurzfristig austauschbar. Der Einsatz von Kompressoren zur Bereitstellung von Pressluft erweist sich als vorteilhaft, da auf eine Anordnung eines aus Rohren bestehenden Leitungssystems verzichtet werden kann. Die Höhe der Investitionskosten sowie des laufenden Instandhaltungsaufwands kann erheblich gesenkt werden. Zusätzlich sinkt die Gefahr, dass das Rohr-Leitungssystem über die Laufzeit der Vorrichtung Leckagen bildet, die kostenintensiv repariert werden müssen.

Zusammenfassend erweist sich die Erfindung als vorteilhaft, da die Störanfälligkeit der Vorrichtung zur Herstellung von Hohlkörpern sinkt und kostspielige Reparaturen vermieden werden. Zusätzlich ist eine Steigerung der Energieeffizienz erreichbar und eine Verlängerung der effektiven Produktionszeit möglich. Gleichermaßen führt die erfindungsgemäße Vorrichtung zu einer erheblichen Verbesserung der Effektivität des Produktionsprozesses und der Qualität der herzustellenden Hohlkörper.

Im Folgenden soll die Erfindung beispielhaft, ohne Beschränkung der Allgemeinheit anhand eines in der Zeichnung dargestellten Ausführungsbeispiels näher erläutert werden.

Hierbei zeigen jeweils in schematischer Darstellung:
Fig. 1 den Hauptantrieb einer Vorrichtung zur Herstellung von Hohlkörpern aus dem Stand der Technik, der über eine Abtriebwelle eine Takeout-Einrichtung antreibt, wobei in der Takeout-Abtriebwelle ein Getriebe angeordnet ist, über das mittels einer weiteren Antriebswelle die Tropfenzuführungseinrichtung angetrieben wird,
Fig. 2 den Hauptantrieb einer Vorrichtung nach Fig. 1, mit dem Unterschied, dass zum Antrieb der Tropfen Zuführungseinrichtung sowie zum Antrieb der Takeout-Einrichtung Abtriebswellen vorgesehen sind, die jeweils direkt vom Hauptgetriebe angetrieben werden.
Fig. 3 einen Schnitt durch eine Pressblasmaschine nach dem Stand der Technik mit mehreren Drehübertragern ohne Darstellung der Segmente, sowie der der Formung des Hohlkörpers dienenden Bauelemente,
Fig. 4 jeweils in Darstellungen den Servoantrieb der Tropfenzuführungseinrichtung, des Karussells und der Takeout-Einrichtung,
Fig. 5 den Hohlkörper während der Formung jeweils in der Tropfen Zuführungseinrichtung, in der Press Position und in der Blaseinrichtung der erfindungsgemäßen Vorrichtung,
Fig. 6 die Vorform jeweils im Bereich der Tropfen Zuführungseinrichtung, im Karussell der Press-Blasmaschine und im Takeout der erfindungsgemäßen Vorrichtung, wobei die Einrichtungen der erfindungsgemäßen Vorrichtung jeweils in Draufsicht gezeigt sind und
Fig. 7 einen Roboter mit zugehöriger Greiferzange.

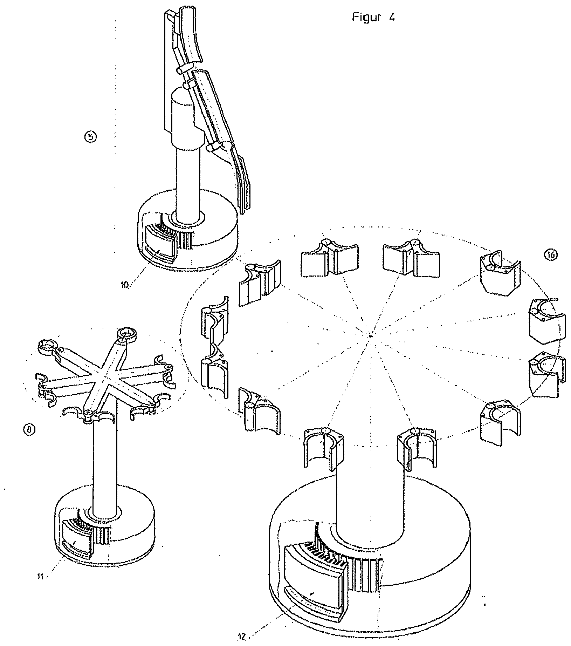

Fig. 4 zeigt jeweils in einzelnen Darstellungen die Servoantriebe 10; 11; 12 der Tropfenzuführungseinrichtung 5, der Takeout Einrichtung 8 und der Press-Blaseinrichtung 16. Die jeweilige Anordnung der Servoantriebe 10; 11; 12 an der Zuführungseinrichtung 5, der Takeout-Einrichtung 8 und der Press Blaseinrichtung 16 in Fig. 4 ist nur beispielhaft gemeint. Selbstverständlich können die jeweiligen Servoantriebe 10; 11; 12 auch an anderen Stellen der jeweiligen Einrichtungen 5; 8 und 16 angeordnet sein.

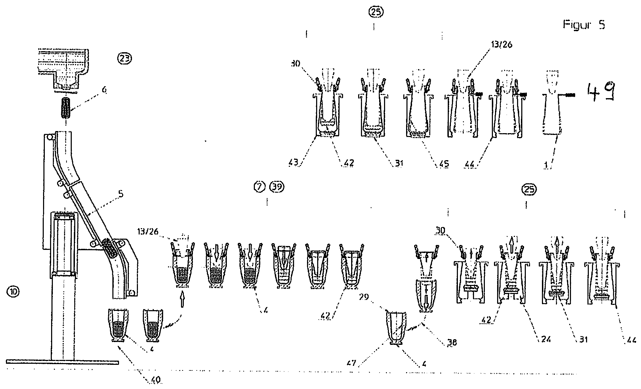

Fig. 5 zeigt eine Glasschmelze 23, eine Tropfenzuführungseinrichtung 5, sowie eine Presseinrichtung 7 und eine Blaseinrichtung 25 der erfindungsgemäßen Vorrichtung zur Herstellung von Hohlkörpern 1. Im Bereich der Glasschmelze 23 ist ein Tropfen 6 einer Glasschmelze dargestellt, der nach Durchlauf einer Zuführungseinrichtung 5 in eine, in einer Tropfenzuführungspositionen 40 befindliche Vorform 4 eingespeist wird. Die Zuführungseinrichtung 5 weist dabei einen mit 10 bezeichneten Servoantrieb (vgl. auch Fig. 4) auf. Im Bereich der Presseinrichtung 7 befindet sich der Tropfen 6 in Pressposition 39. In Pressposition 39 fährt ein Plunger 26 in die Vorform 4 ein. Am oberen offenen Rand 29 der Vorform 4 ist ein Neckring 30 angeordnet. Entgegen der Bewegung des Plungers 26 wird die Glasschmelze in der Pressposition 39 in der Vorform 4 zwischen der Außenwand des Plungers 13 und der Innenwand 47 der Vorform 4 in Richtung des Neckrings 30 gepresst. Auf diese Weise entsteht im Inneren der Vorform 4 ein Vorformling (Kölbel 42). In der Ablösungsstellung 38, vor dem Überwechseln des Kölbels 42 von der Presseinrichtung 7 in die Blaseinrichtung 25 wird der Kölbel 42 vom Neckring 30 gehalten und die Vorform 4 vom Kölbel 42 abgelöst. In der Blaseinrichtung 25 umgreift die Fertigform 24 den Kölbel 42. In der Fertigform 24 ist in Fig. 5 ein Boden 31 dargestellt, der die, durch die Schwerkraft und die Zuführung von Druckluft bedingte Längenausdehnung des Kölbels 42 begrenzt. Eine mit 49 bezeichnete Greiferzange übernimmt den Kölbel aus seiner Halterung im Neckring und führt ihn der weiteren Bearbeitung zu.

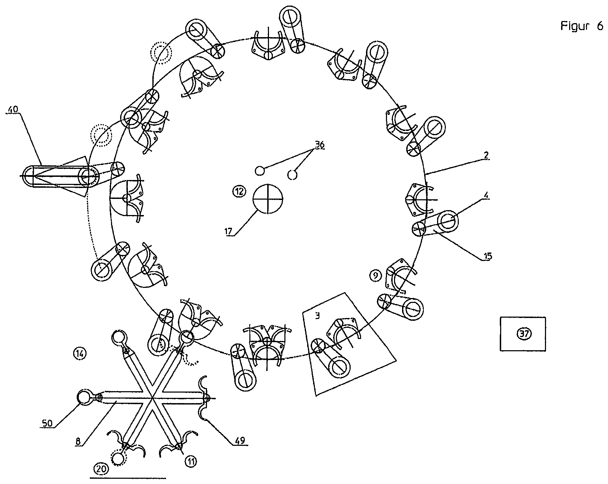

Figur 6 zeigt das Karussell 2 mit dem, die Vorform 4 tragenden Vorformträger 15. Mit Bezugsziffer 9 des Karussells 2 ist eine Formungseinrichtung dargestellt. In Fig. 6 ist der Servoantrieb 12 des Karussells 2 im Zentrum des Karussells 2 angeordnet. Radial außerhalb des Servoantriebs 12 sind die mit 36 bezeichneten Datenkanäle erkennbar. Am unteren Rand des Karussells 2 Ist beispielhaft ein Segment 3 eines Karussells 2 gezeigt. In der Tropfenzuführungsposition 40 wird der Vorform 4 ein Tropfen 6 zugeführt. Eine Takeout-Einrichtung 8 umfasst Greiferzangen 49; 50 (im geöffneten bzw. geschlossenen Zustand) und einen Servoantrieb 11. Radial außerhalb der Takeout Einrichtung 8 ist ein Roboter 14 dargestellt.

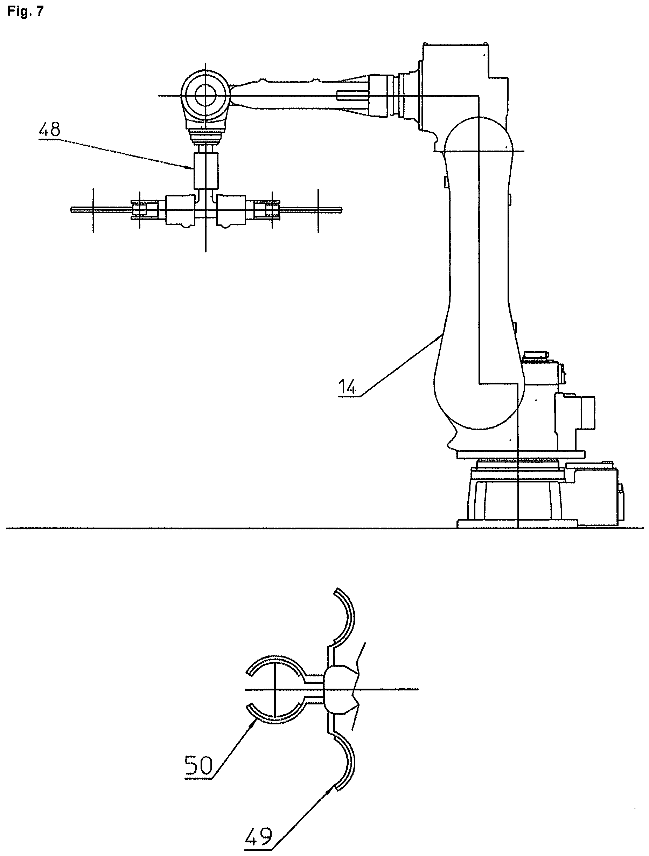

In Figur 7 wird ein Roboter 14 gezeigt, dessen Arme eine Drehachse 48 aufweisen, um die die Greiferzangen 49; 50 drehbar angeordnet sind. Der Roboter entnimmt die Hohlkörper 1 nach abgeschlossener Fertigformung aus der Vorrichtung zur Herstellung von Hohlkörpern und führt sie einer nicht dargestellten Weiter-Transport- bzw. Bearbeitungseinrichtung zu. Dieses Erfassen durch den Roboter findet insbesondere bei der Presseinrichtung 7, bei der Blaseinrichtung 25 oder bei der kombinierten Press-Blaseinrichtung statt.

### Bezugsziffern:

- 1.: Hohlkörper
- 2.: Karussell
- 3.: Segment
- 4.: Vorform
- 5.: Tropfen-Zuführungseinrichtung
- 6.: Tropfen
- 7.: Presseinrichtung
- 8.: Takeout-Einrichtung (Herausnehmer)
- 9.: Formungseinrichtung
- 10.: Servoantrieb Tropfenzuführung
- 11.: Servoantrieb Takeout-Einrichtung
- 12.: Servoantrieb Press-Blas-Maschine
- 13.: Außenwand Plunger
- 14.: Roboter
- 15.: Vorformträger
- 16.: Press-Blasmaschine
- 17.: Mittelsäule
- 18.: frei
- 19.: frei
- 20.: Transportband
- 21.: erster Bereich
- 22.: zweiter Bereich
- 23.: Glasschmelze
- 24.: Fertigform
- 25.: Blaseinrichtung
- 26.: Plunger
- 27.: frei
- 28.: frei
- 29.: obere Rand der Vorform
- 30.: Neckring
- 31.: Boden
- 32.: Einrichtung zur Zuführung von Druckluft
- 33.: Greiferzange
- 34.: frei
- 35.: Sender/Empfänger
- 36.: Datenkanal
- 37.: Kompressor
- 38.: Lösestellung
- 39.: Pressposition
- 40.: Tropfenzuführungsposition
- 41.: frei
- 42.: Kölbel
- 43.: geschlossene Fertigform
- 44.: geöffnete Fertigform
- 45.: Innenwand Hohlkörper
- 46.: frei
- 47.: Innenwand Vorform
- 48.: Drehachse
- 49.: geöffnete Greiferzange
- 50.: geschlossene Greiferzange
- 100.: Hauptantrieb
- 101.: Takeout (Herausnehmer)
- 102.: Tropfenzuführungseinrichtung
- 103.: Press-Blas-Maschine
- 104.: Kupplung
- 105.: Ritzel
- 106.: Hauptgetriebe (Maschinendrehung)
- 107.: Handverstellung
- 108.: Differenzialgetriebe
- 109.: Antrieb der Tropfenzuführungseinrichtung mittels Kurvenscheibe
- 110.: Verteilergetriebe
- 111.: Antriebsmotor
- 112.: Antrieb Takeout
- 113.: Gebläseluft
- 114.: Elektrischer Schleifringübertrager
- 115.: Schaltschrank
- 116.: Bedienelement
- 117.: Grundplatte
- 118.: Druckluft 1
- 119.: Wasser
- 120.: Druckluft 2
- 121.: Medienverteilerrohr
- 122.: Mediendrehübertrager

## Patentansprüche

1. Vorrichtung zur Herstellung von Hohlkörpern (1) aus einer Glasschmelze mit wenigstens einem Karussell (2)
und wenigstens einer Vorform (4), welche bei dem Umlauf des Karussells (2) von wenigstens einem aus wenigstens einer Zuführungseinrichtung (5) der Glasschmelze austretenden Tropfen (6) speisbar ist,
und mit wenigstens einer, der Formung des Hohlkörpers (1) dienenden Einrichtung (9),
**dadurch gekennzeichnet, dass** wenigstens eine Zuführungseinrichtung (5) und wenigstens eine Takeout-Einrichtung (8) jeweils wenigstens einen eigenen Servoantrieb (10, 11) aufweisen, und dass zur Bewegung der wenigstens einen Vorform (4) und zur Bewegung der der Formung des Hohlkörpers (1) dienenden Einrichtung (9) und zur Bewegung des wenigstens einen Plungers (26) wenigstens je ein Servoantrieb vorgesehen ist, wobei der Servoantrieb jeweils ein Direktantrieb ist.

2. Vorrichtung nach Anspruch 1, **dadurch gekennzeichnet, dass** das Karussell (2) wenigstens ein Segment (3) aufweist.

3. Vorrichtung nach einem oder mehreren der vorhergehenden Ansprüche,
**dadurch gekennzeichnet, dass** die der Formung des Hohlkörpers (1) dienende Einrichtung (9) eine Presseinrichtung (7) und/oder eine Blaseinrichtung (25) und/oder eine Bodenstation (31) oder eine kombinierte Press-Blaseinrichtung und/oder eine Bodenstation (31) aufweist.

4. Vorrichtung nach einem oder mehreren der vorhergehenden Ansprüche,
**dadurch gekennzeichnet, dass** der Servoantrieb (12) des Karussells (2) oder der Takeout-Einrichtung (8) oder der Zuführungseinrichtung (5) die Führungsgröße für alle anderen Antriebe ist.

5. Vorrichtung nach einem oder mehreren der vorhergehenden Ansprüche, **dadurch gekennzeichnet, dass** die wenigstens eine Takeout-Einrichtung (8) wenigstens einen Roboter (14) aufweist.

6. Vorrichtung nach einem oder mehreren der Ansprüche 1-4, **dadurch gekennzeichnet, dass** die wenigstens eine Takeout-Einrichtung (8) ein Roboter (14) ist.

7. Vorrichtung nach einem oder mehreren der vorhergehenden Ansprüche, **dadurch gekennzeichnet, dass** das wenigstens eine Karussell (2) wenigstens einen Roboter (14) aufweist.

8. Vorrichtung nach einem oder mehreren der vorhergehenden Ansprüche, **dadurch gekennzeichnet, dass** das wenigstens eine Segment (3) des Karussells (2) wenigstens einen Roboter (14) aufweist.

9. Vorrichtung nach einem der Ansprüche 5, 6, 7, 8 **dadurch gekennzeichnet, dass** der wenigstens eine Roboter (14) stationär außerhalb der Takeout-Einrichtung (8) oder des Karussells (2) oder des Segments (3) des Karussells (2) angeordnet ist.

10. Vorrichtung nach einem oder mehreren der vorhergehenden Ansprüche, **dadurch gekennzeichnet, dass** zur Bewegung der wenigstens einen Vorform (4) wenigstens ein Roboter (14) vorgesehen ist.

11. Vorrichtung nach einem oder mehreren der vorhergehenden Ansprüche, **dadurch gekennzeichnet, dass** zur Bewegung der der Formung des Hohlkörpers (1) dienenden Einrichtung (9) wenigstens ein Roboter (14) vorgesehen ist.

12. Vorrichtung nach einem oder mehreren der vorhergehenden Ansprüche, **dadurch gekennzeichnet, dass** die elektrische Energieübertragung wenigstens eine vorzugsweise ortsfeste Zuführung und wenigstens einen mit dem Karussell (2) rotierenden Abnehmer aufweist.

13. Vorrichtung nach Anspruch 11, **dadurch gekennzeichnet, dass** die Energieübertragung zwischen Zuführung und Abnehmer induktiv erfolgt.

14. Vorrichtung nach einem oder mehreren der vorhergehenden Ansprüche, **dadurch gekennzeichnet, dass** die Datenübertragung wenigstens eine, vorzugsweise ortsfeste Zuführung und wenigstens einen mit dem Karussell (2) rotierenden Abnehmer aufweist.

15. Vorrichtung nach Anspruch 14, **dadurch gekennzeichnet, dass** die Datenübertragung zwischen Zuführung und Abnehmer durch Lichtsignale erfolgt.

16. Vorrichtung nach einem oder mehreren der vorhergehenden Ansprüche, **dadurch gekennzeichnet, dass** die Vorrichtung jeweils wenigstens eine Pumpe zur Versorgung mit Wasser, Vakuum, Kühlluft, Pressluft oder Schmieröl aufweist.

## Claims

1. Device for producing hollow bodies (1) from a glass melt with at least one rotary indexing table (2),
and with at least one blank mold (4) which can be fed with at least one gob (6) discharged from at least one feeding device (5) of the glass melt while the rotary indexing table (2) is rotating,
and with at least one device (9) serving the purpose of molding the hollow body (1),
**characterized in that** at least on feeding device (5) and at least one take-out device (8) each have at least one separate servo drive (10, 11), and that for moving the at least one blank mold (4), and for moving the device (9) serving the purpose of molding the hollow body (1), and for moving the at least one plunger (26), at least one servo drive is provided respectively, wherein the servo drive is a direct drive in each case.

2. Device according to claim 1, **characterized in that** the rotary indexing table (2) has at least one segment (3).

3. Device according to one or more of the preceding claims, **characterized in that** the device (9) serving the purpose of molding the hollow body (1) has a pressing device (7) and/or a blowing device (25) and/or a ground station (31) or a combined press-and-blow device and/or a ground station (31).

4. Device according to one or more of the preceding claims, **characterized in that** the servo drive (12) of the rotary indexing table (2) or the take-out device (8) or the feeding device (5) is the reference variable for all other drives.

5. Device according to one or more of the preceding claims, **characterized in that** the at least one take-out device (8) has at least one robot (14).

6. Device according to one or more of claims 1 to 4, **characterized in that** the at least one take-out device (8) is a robot (14).

7. Device according to one or more of the preceding claims, **characterized in that** the at least one rotary indexing table (2) has at least one robot (14).

8. Device according to one or more of the preceding claims, **characterized in that** the at least one segment (3) of the rotary indexing table (2) has at least one robot (14).

9. Device according to claims 5, 6, 7, 8, **characterized in that** the at least one robot (14) is arranged in a stationary manner outside the take-out device (8) or the rotary indexing table (2) or the segment (3) of the rotary indexing table (2).

10. Device according to one or more of the preceding claims, **characterized in that** at least one robot (14) is provided for moving the at least one blank mold (4).

11. Device according to one or more of the preceding claims, **characterized in that** at least one robot (14) is provided for moving the device (9) serving the purpose of molding the hollow body (1).

12. Device according to one or more of the preceding claims, **characterized in that** the electric energy transmission system has at least one, preferably stationary, supply line and at least one collector rotating together with the rotary indexing table (2).

13. Device according to claim 11, **characterized in that** the electric power transmission between the supply line and the collector takes place inductively.

14. Device according to one or more of the preceding claims, **characterized in that** the data transmission system has at least one, preferably stationary, supply line and at least one collector rotating together with the rotary indexing table (2).

15. Device according to claim 14, **characterized in that** the data transmission between the supply line and the collector takes place by light signals.

16. Device according to one or more of the preceding claims, **characterized in that** the device has at least one pump for providing water, a vacuum, cooling air, compressed air or lubricating oil.

## Revendications

1. Dispositif de fabrication de corps creux (1) à partir de verre en fusion, comportant au moins un carrousel (2)
et au moins une préforme (4) qui, lors de la circulation du carrousel (2), peut être alimentée par au moins une goutte (6) sortant au moins d'un dispositif d'alimentation (5) du verre en fusion,
et comportant au moins un dispositif (9) servant au formage du corps creux (1),
**caractérisé en ce qu'**au moins un dispositif d'alimentation (5) et au moins un mécanisme d'extraction (8) présentent chacun au moins un servomoteur (10, 11) propre, et **en ce que** pour déplacer ladite au moins une préforme (4) et pour déplacer le dispositif (9) servant au formage du corps creux (1) et pour déplacer ledit au moins un plongeur (26), il est prévu au moins un servomoteur respectif, le servomoteur étant respectivement un entraînement direct.

2. Dispositif selon la revendication 1, **caractérisé en ce que** le carrousel (2) présente au moins un segment (3).

3. Dispositif selon l'une ou plusieurs des revendications précédentes, **caractérisé en ce que** le dispositif (9) servant au formage du corps creux (1) présente un dispositif de pressage (7) et/ou un dispositif de soufflage (25) et/ou une station au sol (31) ou un dispositif combiné de pressage-soufflage et/ou une station au sol (31).

4. Dispositif selon l'une ou plusieurs des revendications précédentes, **caractérisé en ce que** le servomoteur (12) du carrousel (2) ou du mécanisme d'extraction (8) ou du dispositif d'alimentation (5) est la grandeur de référence pour tous les autres entraînements.

5. Dispositif selon l'une ou plusieurs des revendications précédentes, **caractérisé en ce que** ledit au moins un mécanisme d'extraction (8) présente au moins un robot (14).

6. Dispositif selon l'une ou plusieurs des revendications 1 à 4, **caractérisé en ce que** ledit au moins un mécanisme d'extraction (8) est un robot (14).

7. Dispositif selon l'une ou plusieurs des revendications précédentes, **caractérisé en ce que** ledit au moins un carrousel (2) présente au moins un robot (14).

8. Dispositif selon l'une ou plusieurs des revendications précédentes, **caractérisé en ce que** ledit au moins un segment (3) du carrousel (2) présente au moins un robot (14).

9. Dispositif selon l'une des revendications 5, 6, 7, 8, **caractérisé en ce que** ledit au moins un robot (14) est agencé stationnaire en dehors du mécanisme d'extraction (8) ou du carrousel (2) ou du segment (3) du carrousel (2).

10. Dispositif selon l'une ou plusieurs des revendications précédentes, **caractérisé en ce qu'**il est prévu au moins un robot (14) pour déplacer ladite au moins une préforme (4).

11. Dispositif selon l'une ou plusieurs des revendications précédentes, **caractérisé en ce qu'**il est prévu au moins un robot (14) pour déplacer le dispositif (9) servant au formage du corps creux (1).

12. Dispositif selon l'une ou plusieurs des revendications précédentes, **caractérisé en ce que** la transmission d'énergie électrique présente au moins une alimentation de préférence fixe et au moins un consommateur tournant avec le carrousel (2).

13. Dispositif selon la revendication 11, **caractérisé en ce que** la transmission d'énergie entre l'alimentation et le consommateur a lieu par induction.

14. Dispositif selon l'une ou plusieurs des revendications précédentes, **caractérisé en ce que** la transmission de données présente au moins une alimentation de préférence fixe et au moins un consommateur tournant avec le carrousel (2).

15. Dispositif selon la revendication 14, **caractérisé en ce que** la transmission de données entre l'alimentation et le consommateur a lieu par signaux lumineux.

16. Dispositif selon l'une ou plusieurs des revendications précédentes, **caractérisé en ce que** le dispositif présente au moins une pompe respective pour l'approvisionnement en eau, en vide, en air de refroidissement, en air sous pression ou en huile de lubrification.
